# EUROPÄISCHE PATENTANMELDUNG

(11) **EP 1 333 190 A2**
(43) Veröffentlichungstag der Anmeldung: **06.08.2003**
(21) Anmeldenummer: 03000236.4
(22) Anmeldetag: 08.01.2003
(51) Int. Cl.: F16F 9/20, F16F 9/06, B60G 15/00

(54) **Federbein**

(30) Priorität: 05.02.2002 DE 10204590
(71) Anmelder: ThyssenKrupp Bilstein GmbH, 58256 Ennepetal (DE)
(72) Erfinder: Hönig, Michael, Dipl.-Ing., 58256 Ennepetal (DE); Wirtz, Walter, Dipl.-Ing., 58285 Gevelsberg (DE); Di Fina, Marcello, Dipl.-Ing., 44791 Bochum (DE); Hofmann, Klaus, 58285 Gevelsberg (DE); Poetsch, Günter, Dipl.-Ing., 58332 Schwelm (DE)

(57) **Zusammenfassung**

Um ein als Teil der Anbindung eines Fahrzeugrades an ein Kraftfahrzeug dienendes Federbein mit einer, einen Dämpferkolben (5) tragenden, oszillierend in ein Gehäuse (1) eintauchenden Kolbenstange (4), die mit ihrem äußeren Ende (20) am Fahrzeugaufbau befestigt ist, wobei die Kolbenstange (4) mittels zweier voneinander beabstandeter Lager radial geführt ist und der Dämpferkolben (5) den Arbeitsraum in zwei Teilräume (9, 10) trennt, derartig weiterzubilden, dass eine gute Übertragung des eingeleiteten Kraftmomentes von der Kolbenstange (4) auf das Gehäuse (1) des Federbeins erfolgt, wobei auch eine Leichtbauweise des Federbeins erzielt werden soll, durchdringt die Kolbenstange (4) beide Enden des Federbeins und wird hier jeweils radial geführt.

## Beschreibung

Die Erfindung betrifft ein Federbein als Teil der Anbindung eines Fahrzeugrades nach dem Oberbegriff des Anspuchs 1.

Die Ausbildung derartiger Federbeine ist allgemein bekannt. Die Federbeine weisen ein Gehäuse auf, in das oszillierend eine Kolbenstange eintaucht, an dessen eintauchendem Ende ein Dämpferkolben angeordnet ist. Dieser Dämpferkolben kann mit Durchbrüchen und Dämpfungsventilen zum Erreichen der vorgegebenen Dämpfungskraft ausgebildet sein.

Federbeine werden zum einen, vorzugsweise am Ende der Kolbenstange, am Fahrzeugaufbau befestigt. Sie tragen üblicherweise, aber nicht notwendigerweise, einen Federteller zum Aufnehmen des unteren Endes einer Wendelfeder. Am unteren Ende des Federbeins ist ein Anbindungsflansch vorgesehen, an dem zum einen die Tragelemente für das Fahrzeugrad und zum anderen die Führungsstangen zum Führen des Rades am Fahrzeug angebracht sind.

Durch die von der Mittellinie des Federbeins beabstandete Befestigung des Rades hat das Federbein Momente zu übertragen, die sich als Radialkräfte zum einen am Dämpfungskolben und zum anderen an der oberen Führung der Kolbenstange auswirken. Es wird zwar versucht, die durch das Rad eingeleiteten Momente durch eine Schrägstellung des unteren Federtellers und eine besondere Ausgestaltung der Feder auszugleichen. Dieses kann jedoch nicht vollständig geschehen, da das eingeleitete Moment sich mit der wechselnden Vertikalbewegung des Rades zum Fahrzeug ändert.

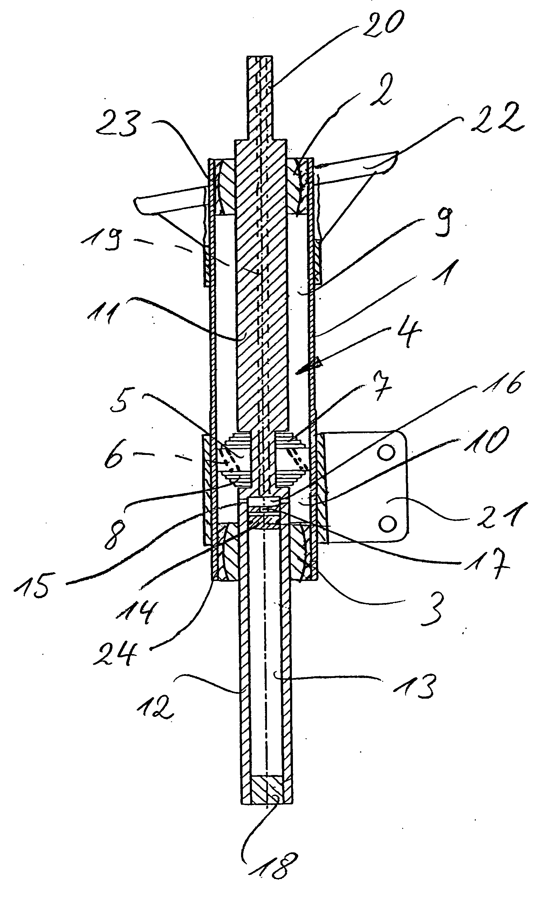

Um die eingeleiteten Momente und Horizontalkräfte ausgleichen zu können, zeigt Bild 6.43 der Literatur Reimpell-Stoll; Fahrwerktechnik: Stoß- und Schwingungsdämpfer, 1989, die radiale Abstützung der Kolbenstange an zwei voneinander beabstandeten Lagern. Diese Ausbildung ist jedoch sehr aufwendig und kann nur zum Teil für Leichtbaufederbeine Verwendung finden.

Der Erfindung liegt die Aufgabe zugrunde, ein gattungsgemäßes Federbein derartig weiterzubilden, dass eine gute Übertragung des eingeleiteten Kraftmomentes von der Kolbenstange auf das Gehäuse des Federbeins erfolgt. Dabei soll erreicht werden, dass eine Leichtbauweise des Federbeins erzielt wird.

Diese Aufgabe wird erfindungsgemäß durch die Merkmale des Anspruchs 1 gelöst. Vorteilhafte Aus- und Weiterbildungen sind in den Ansprüchen 2 bis 6 beschrieben.

Die mit der Erfindung erzielten Vorteile bestehen insbesondere darin, dass das eingeleitete Kraftmoment auf das Federbein bei geringstmöglichen Radialkräften von der Kolbenstange auf das Gehäuse des Federbeins übertragen werden kann. Weiterhin vorteilhaft tritt nur ein geringer Verschleiß an den Führungen der Kolbenstange auf, was zu einer erhöhten Leichtgängigkeit der in das Gehäuse eintauchenden Kolbenstange führt. Da die Kolbenstange nur geringe Biegemomente zu übertragen hat, kann sie darüber hinaus mit einem geringeren Durchmesser, und damit leichter ausgebildet werden.

Die Ausbildung mit den Merkmalen der Unteransprüche führen darüber hinaus zu einer kurzen Baulänge des Federbeins.

Ein Ausführungsbeispiel der Erfindung ist in der Zeichnung dargestellt und wird im Folgenden näher beschrieben. Die einzige Figur zeigt einen Schnitt durch ein schematisch dargestelltes Federbein.

Das im Ausführungsbeispiel dargestellte Federbein ist als Einrohrfederbein ausgebildet. Andere Federbeinsysteme, wie beispielsweise Zweirohrfederbeine, fallen jedoch in gleicher Weise unter die Erfindung.

Das Federbein weist ein Gehäuse 1, im Ausführungsbeispiel ein Dämpferrohr, auf. Dieses Gehäuse 1 ist an beiden Enden mit einer Dichtungs- und Führungseinheit 2, 3 versehen. Die Details dieser Dichtungs- und Führungseinheit 2, 3, also die Dichtungen und Gleitlager, sind nicht dargestellt.

Durch die Zentralöffnung beider Dichtungs- und Führungseinheiten 2, 3 taucht oszillierend eine Kolbenstange 4 in das Gehäuse ein. Etwa mittig an der Kolbenstange ist ein Dämpferkolben 5 angeordnet. Der Dämpferkolben 5 weist Durchbrüche 6 auf, die mit Ringfederpaketen 7, 8 zusammenwirken und in bekannter Weise durch das gedämpfte Durchströmen der Dämpfungsflüssigkeit eine gezielte Dämpfung erreichen.

Der im Gehäuse 1 verbleibende Arbeitsraum wird durch den Dämpferkolben 5 in zwei Teilräume 9, 10 getrennt. Der Arbeitsraum und somit die Teilräume 9, 10 sind mit Dämpfungsflüssigkeit gefüllt. Bei einer Abwärtsbewegung des Dämpferkolbens 5 durchfließt Dämpfungsflüssigkeit die Durchbrüche 6 vom unteren Teilraum 10 zum oberen Teilraum 9, wobei das obere Ringfederpaket 7 angehoben wird. Bei einer Aufwärtsbewegung des Dämpferkolbens 5 erfolgt die Durchströmung in umgekehrter Richtung, wobei das Ringfederpaket 8 angehoben wird.

Die Kolbenstange 4 ist im Bereich des Dämpferkolbens 5 in geeigneter Weise teilbar ausgebildet und bildet somit ein oberes Kolbenstangenteil 11 und ein unteres Kolbenstangenteil 12. Beide Kolbenstangenteile 11, 12 weisen etwa den gleichen Durchmesser auf. Da sich die Kolbenstangenteile 11, 12 gleichsinnig bewegen, also das untere Kolbenstangenteil 12 aus dem Gehäuse 1 herausfährt, wenn das obere Kolbenstangenteil 11 in das Gehäuse 1 eintaucht, wird beim oszillierenden Eintauchen der Kolbenstange entgegen Federbeinen nach dem bisherigen Stand der Technik keine Dämpfungsflüssigkeit verdrängt. Von daher wäre es nicht erforderlich, einen gasgefüllten Ausgleichsraum vorzusehen. Ein derartiger Gasraum 13, der mittels eines Trennkolbens 14 von den Dämpfungsflüssigkeit enthaltenden Räumen des Federbeins abgetrennt ist, ist jedoch erforderlich, um die durch Temperatureinfluss hervorgerufene Ausweitung der Dämpfungsflüssigkeit auszugleichen. Dieser Ausgleich benötigt jedoch nur ein geringes Gasraumvolumen.

Von daher kann der Gasraum in einer zentralen Bohrung des unteren Kolbenstangenteils 12 angeordnet werden. Der Trennkolben 14 bewegt sich dann innerhalb dieser Bohrung. Seitliche Durchbrüche 15 verbinden den Dämpfungsflüssigkeit aufnehmenden Bereich 16 des hohlgebohrten unteren Kolbenstangenteils 12 mit dem unteren Teilraum 10. Um Druckschwankungen der Dämpfungsflüssigkeit, hervorgerufen durch die Dämpfungstätigkeit des Dämpferkolbens 5, nicht zu einem unnötigen Oszillieren des Trennkolbens 14 führen zu lassen, ist im Dämpfungsflüssigkeit enthaltenden Bereich 16 des unteren Kolbenstangenteils 12 eine Drossel 17 angeordnet, die diese Druckschwankungen, insbesondere die hochfrequenten Druckschwankungen der Dämpfungsflüssigkeit drosselt.

Die zentrale Bohrung des unteren Kolbenstangenteils 12 wird an ihrem Ende mit einem nicht näher dargestellten Boden 18 verschlossen. Im Bereich dieses Bodens 18 kann ein nicht dargestelltes Füllventil angeordnet sein, das ein Füllen des Gasraums 13 mit einem Gaspolster ermöglicht, nachdem das Federbein vollständig montiert und die Dämpfungsflüssigkeit eingebracht ist.

Auch das obere Kolbenstangenteil 11 kann eine zentrale Bohrung 19 aufweisen. Diese zentrale Bohrung 19 kann Stell- oder Steuerelemente zum Verstellen oder Steuern von Bypassquerschnitten aufnehmen.

Das äußere Ende 20 des oberen Kolbenstangenteils 11 ist mit geeigneten Befestigungsmitteln zum Befestigen des Federbeins am Fahrzeugaufbau versehen. Hier kann beispielsweise ein Außengewinde aufgebracht sein. Das Gehäuse 1 des Federbeins trägt in bekannter Weise einen Aufnahmeflansch 21 zur Anbindung des Rades und der Führungsstangen und einen Federteller 22 zum Tragen des unteren Endes der Wendelfeder.

Um eine Überbestimmung der Lagerung der Kolbenstange 4 mit Bezug auf die Oszillation des Dämpferkolbens 5 am Innenmantel des Gehäuses 1 zu vermeiden, werden die Dichtungs- und Führungseinheiten 2, 3 sphärisch oder kardanisch beweglich an den Enden des Gehäuses 1 befestigt. Dieses ist in der Zeichnung durch die Kugelflächen 23, 24 dargestellt.

### Bezugszeichenliste

- 1.: Gehäuse
- 2.: Dichtungs- und Führungseinheit
- 3.: Dichtungs- und Führungseinheit
- 4.: Kolbenstange
- 5.: Dämpferkolben
- 6.: Durchbrüche
- 7.: Ringfederpaket
- 8.: Ringfederpaket
- 9.: Teilraum
- 10.: Teilraum
- 11.: Oberes Kolbenstangenteil
- 12.: Unteres Kolbenstangenteil
- 13.: Gasraum
- 14.: Trennkolben
- 15.: Durchbruch
- 16.: Bereich
- 17.: Drossel
- 18.: Boden
- 19.: Bohrung
- 20.: Äußeres Ende
- 21.: Aufnahmeflansch
- 22.: Federteller
- 23.: Kugelfläche
- 24.: Kugelfläche

## Patentansprüche

1. Federbein als Teil der Anbindung eines Fahrzeugrades an ein Kraftfahrzeug mit einer, einen Dämpferkolben (5) tragenden, oszillierend in ein Gehäuse (1) eintauchenden Kolbenstange (4), die mit ihrem äußeren Ende (20) am Fahrzeugaufbau befestigt ist, wobei die Kolbenstange (4) mittels zweier voneinander beabstandeter Lager radial geführt ist und der Dämpferkolben (5) den Arbeitsraum in zwei Teilräume (9, 10) trennt, **dadurch gekennzeichnet, dass** die Kolbenstange (4) beide Enden des Federbeins durchdringt und an den Enden radial geführt wird.

2. Federbein nach Anspruch 1, **dadurch gekennzeichnet, dass** wenigstens ein nach außen dringendes Kolbenstangenteil (12) hohl ausgebildet ist, einen mittels eines Trennkolbens (14) abgetrennten Gasraum (13) aufweist und der dem Gasraum (13) gegenüberliegende Hohlraum des hohl ausgebildeten Kolbenstangenteils (12) hydraulisch mit dem angrenzenden Teilraum (10) des Arbeitsraumes verbunden ist.

3. Federbein nach Anspruch 2, **dadurch gekennzeichnet, dass** im Hohlraum des Kolbenstangenteils (12) zwischen dem Trennkolben (14) und der hydraulischen Verbindung zum Teilraum (10) eine Drossel (17) angeordnet ist.

4. Federbein nach Anspruch 2 oder Anspruch 3, **dadurch gekennzeichnet, dass** das Ende des hohlgebohrten Kolbenstangenteils (12) ein Gasfüllventil aufweist.

5. Federbein nach einem oder mehreren der Ansprüche 1 bis 4, **dadurch gekennzeichnet, dass** beide Teile (11, 12) der Kolbenstange (4) etwa den gleichen Durchmesser aufweisen.

6. Federbein nach einem oder mehreren der Ansprüche 1 bis 5, **dadurch gekennzeichnet, dass** die Lager schwenkbeweglich, sphärisch oder kardanisch an den Enden des Federbeins angebunden sind.
